(19) Europäisches Patentamt
European Patent Office
Office européen des brevets

(11) **EP 4 411 884 A1**

(12) **EUROPEAN PATENT APPLICATION**
published in accordance with Art. 153(4) EPC

(43) Date of publication:
**07.08.2024 Bulletin 2024/32**

(21) Application number: **22875818.1**

(22) Date of filing: **13.09.2022**

(51) International Patent Classification (IPC):
*H01M 4/38* (2006.01)    *H01M 4/133* (2010.01)
*H01M 4/134* (2010.01)    *H01M 4/36* (2006.01)
*H01M 4/587* (2010.01)

(52) Cooperative Patent Classification (CPC):
**H01M 4/133; H01M 4/134; H01M 4/36; H01M 4/38;
H01M 4/587;** Y02E 60/10

(86) International application number:
**PCT/JP2022/034231**

(87) International publication number:
**WO 2023/053947 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021162291**

(71) Applicant: **Panasonic Intellectual Property
Management Co., Ltd.
Kadoma-shi, Osaka 571-0057 (JP)**

(72) Inventors:
• **SATO, Yosuke
Kadoma-shi, Osaka 571-0057 (JP)**
• **OKAZAKI, Keita
Kadoma-shi, Osaka 571-0057 (JP)**
• **OKUNO, Yukiho
Kadoma-shi, Osaka 571-0057 (JP)**

(74) Representative: **Novagraaf International SA
Chemin de l'Echo 3
1213 Onex, Geneva (CH)**

(54) **SECONDARY BATTERY**

(57)    A secondary battery disclosed herein includes a positive electrode, and a negative electrode containing a negative electrode active material. The negative electrode active material contains a carbon material and a silicon-containing material. The silicon-containing material includes a first silicon-containing material and a second silicon-containing material. The average particle diameter of the first silicon-containing material and the average particle diameter of the second silicon-containing material are each smaller than the average particle diameter of the carbon material. The average circularity $Z_c$ of the carbon material, the average circularity $Z_{s1}$ of the first silicon-containing material, and the average circularity $Z_{s2}$ of the second silicon-containing material satisfy $Z_{s1} < Z_c$ and $Z_{s1} < Z_{s2}$.

**Description**

[Technical Field]

The present disclosure relates to a secondary battery.

[Background Art]

It is known that silicon (Si) and silicon-containing materials such as silicon oxide can absorb more lithium ions per unit volume than carbon materials such as graphite. Therefore, it has been proposed to use a silicon-containing material for a negative electrode of a lithium ion secondary battery.

PTL 1 (Japanese Laid-Open Patent Publication No. 2016-110969) discloses "a negative electrode active material for a lithium ion secondary battery comprising: Si or a Si alloy, a carbonaceous material or a carbonaceous material and graphite; wherein the negative electrode active material is substantially spherical composite particles in which the negative electrode active material has an average particle diameter (D50) of 1 to 40 μm and an average circularity of 0.7 to 1.0".

[Citation List]

[Patent Literature]

PTL 1: Japanese Laid-Open Patent Publication No. 2016-110969

[Summary of Invention]

[Technical Problem]

Currently, there is demand for further improvement of charge/discharge cycle characteristics of secondary batteries. In such circumstances, one of objects of the present disclosure is to provide a secondary battery having high capacity maintenance percentage in charge/discharge cycles.

[Solution to Problem]

One aspect of the present disclosure relates to a secondary battery. The secondary battery includes a positive electrode and a negative electrode containing a negative electrode active material, in which the negative electrode active material contains a carbon material and a silicon-containing material, the silicon-containing material includes a first silicon-containing material and a second silicon-containing material, an average particle diameter of the first silicon-containing material and an average particle diameter of the second silicon-containing material are each smaller than an average particle diameter of the carbon material, and an average circularity Zc of the carbon material, an average circularity Zs1 of the first silicon-containing material, and an average circularity Zs2 of the second silicon-containing material satisfy Zs1<Zc and Zs1<Zs2.

[Advantageous Effects of Invention]

According to the present disclosure, it is possible to obtain a secondary battery having high capacity maintenance percentage in charge/discharge cycles.

While novel features of the present invention are set forth particularly in the appended claims, the present invention, both as to organization and content, will be better understood and appreciated, along with other objects and features thereof, from the following detailed description taken in conjunction with the drawings.

[Brief Description of Drawings]

[FIG. 1] A cross-sectional view schematically showing a silicon-containing material according to one embodiment of the present invention.

[FIG. 2] A partially cutaway schematic perspective view of a secondary battery according to one embodiment of the present invention.

[Description of Embodiments]

Although an embodiment according to the present disclosure will be described below using an example, an embodiment according to the present disclosure is not limited to an example described below. Although specific numerical values and materials may be mentioned as examples in the following description, other numerical values and other materials may be used as long as the invention according to the present disclosure can be implemented. The term "range of numerical value A to numerical value B" used in this specification includes the numerical value A and the numerical value B, and can be read as "range of numerical value A or more and numerical value B or less". In the following description, when lower limits and upper limits of numerical values regarding specific physical properties or conditions are given as examples, any of the above-mentioned lower limits and any of the above-mentioned upper limits can be combined, as long as the lower limit is not greater than or equal to the upper limit.

(Secondary Battery)

A secondary battery according to this embodiment includes a positive electrode, and a negative electrode containing a negative electrode active material. The negative electrode active material contains a carbon material and a silicon-containing material. The silicon-containing material includes a first silicon-containing material and a second silicon-containing material. Hereinafter, the carbon material and the silicon-containing material may be respectively referred to as a "carbon material (C)" and a "silicon-containing material (S)". The secondary battery according to this embodiment satisfies the following conditions (1) and (2).

(1) The average particle diameter of the first silicon-containing material and the average particle diameter of the second silicon-containing material are each smaller than the average particle diameter of the carbon material (C).
(2) The average circularity Zc of the carbon material (C), the average circularity Zs1 of the first silicon-containing material, and the average circularity Zs2 of the second silicon-containing material satisfy Zs1<Zc and Zs1<Zs2.

Although the silicon-containing material (S) may contain carbon, the carbon material in the silicon-containing material (S) is not included in the carbon material (C), but is included in the silicon-containing material (S). Also, in this specification, a description regarding the silicon-containing material (S) is applicable to both the first silicon-containing material and the second silicon-containing material.

The silicon-containing material (S) and the carbon material (C) are each present in the negative electrode in the form of particles. In general, the circularity of particles can be obtained using Formula (M1) below.

$$\text{Circularity} = 4\pi S/L^2 \qquad (M1)$$

[where in Formula (M1), S represents the area of a projection image of a particle, and L represents a perimeter of the projection image.]

In this specification, when the circularities of the silicon-containing material (S) and the carbon material (C) in the negative electrode are measured, the circularities of the silicon-containing material (S) and the carbon material (C) in a cross-section of the negative electrode are measured. In this case, the area of a cross-section of a particle is used as S in Formula (M1), and the perimeter of the cross-section is used as L in Formula (M1). In one aspect, the circularities measured in this manner respectively refer to the circularities of cross sections of the silicon-containing material (S) and the carbon material (C).

S (the area of the cross-section of the particle) and L (the perimeter of the cross-section of the particle) used in Formula (M1) are acquired using the following method. First, the negative electrode is taken out from a battery by disassembling the battery, and then a cross-section of the negative electrode is exposed. Then, an image is obtained by imaging the cross-section using a scanning electron microscope. Thereafter, an energy dispersive X-ray spectroscopy (EDS) is used to distinguish between the carbon material and the silicon-containing material in the image. The area of the cross-sections of the particles and the perimeter of the cross-sections of the particles are acquired through image analysis of the particle images (particle cross-sections) in the image.

The average circularity can be determined by measuring the circularity of each of 100 particles selected at random and taking the arithmetic average of the 100 obtained circularities. When an image obtained by projecting a particle is a perfect circle, the circularity thereof is 1. Therefore, it is conceivable that the higher the degree of circularity is, the closer the particle becomes to a true sphere.

The average particle diameters of particles made of the silicon-containing material (S), particles made of the carbon material (C), and the like can also be determined through image analysis in the same manner. In such a case, 100 particles are first selected at random in an image, and the maximum diameters thereof are measured. Then, the arithmetic average of the 100 measured maximum diameters is obtained, and the obtained average value is used as the average particle diameter.

The median diameter (D50) at which the cumulative volume is 50% in a volume-based particle size distribution can be used as the average particle diameter of particles that can be individually separated (e.g., particles before a negative electrode mixture is formed). The median diameter can be determined using, for example, a laser diffraction/scattering particle size distribution analyzer.

The average circularity of particles that can be individually separated (e.g., particles before a negative electrode mixture is formed) can be measured using the following method. First, particles for measurement are dispersed in resin. Then, a cross-section of the resin is exposed, and an image is obtained by imaging the cross-section using a scanning electron microscope. The area of the cross-sections of the particles and the perimeter of the cross-sections of the particles are acquired through image analysis of particle images (particle cross-sections) in the image.

It is preferable to increase the circularity of the silicon-containing material (S) because, for example, a round shape increases the bulk density and increases the packing density when the silicon-containing material (S) is used for the negative electrode. However, the inventors of the present invention found that, when only a silicon-containing material (S) with high circularity is used, it is difficult to achieve favorable charge/discharge cycle characteristics. As a result of intensive studies to resolve this issue, the inventors of the present invention newly found that a secondary battery having favorable charge/discharge cycle characteristics can be obtained by satisfying conditions (1) and (2) above. The present disclosure is based on this new finding.

At present, it is not clear why favorable cycle characteristics can be achieved by satisfying the conditions (1) and (2) above. However, the reason may be conceivable as follows. In general, silicon-containing materials have lower electrical conductivity than carbon materials. Thus, when a mixture of the silicon-containing material (S) and the carbon material (C) is used, it is important that many contact points are present between the silicon-containing material (S) and the carbon material (C) in order to form many conductive paths. In particular, when a charge/discharge cycle is repeated, the silicon-containing material (S) and the carbon material (C) repeatedly expand and contract, which is likely to break a point of contact therebetween. When the above conditions (1) and (2) are satisfied, it is conceivable that the silicon-containing material (S) is likely to enter gaps between carbon materials (C), and the number of points of contact therebetween increases. As a result, it is conceivable that, even when the charge/discharge cycle is repeated, the conductive path is maintained, and favorable charge/discharge cycle characteristics are achieved.

Further, the negative electrode of the secondary battery according to the present disclosure contains two types of silicon-containing materials having different average circularities. A silicon-containing material having a high average circularity is less prone to stress concentration due to expansion and contraction accompanying charging and discharging of the battery, compared to a silicon-containing material having a low average circularity, and thus particles are less likely to crack and the specific surface area is less likely to increase. Thus, an increase in side reactions of a silicon-containing material can be suppressed by using a silicon-containing material having a high average circularity. On the other hand, even when a charge/discharge cycle is repeated, a conductive path can be easily maintained by using a silicon-containing material having a low average circularity. Therefore, in particular, it is possible to improve cycle characteristics using two types of silicon-containing materials having different average circularities.

Furthermore, when the above conditions (1) and (2) are satisfied, voids are formed between particles having a large size and made of a carbon material (C), and the silicon-containing material (S) is likely to be accommodated in the voids. Therefore, the filling rate of the active material in the negative electrode can be increased with ease, and the negative electrode with high capacity can be obtained with ease.

The average circularity of the carbon material (C) may be 0.7 or more or 0.8 or more, and is 1 or less.

The average circularity Zs1 of the first silicon-containing material may be 0.6 or less or 0.5 or less, and 0.2 or more, 0.3 or more, or 0.4 or more. In one example of the negative electrode, the average circularity Zc of the carbon material (C) is 0.7 or more, and the average circularity Zs1 of the first silicon-containing material is 0.6 or less. With this configuration, charge/discharge cycle characteristics are particularly improved.

The average particle diameter of the carbon material (C) may be 5 $\mu$m or more or 10 $\mu$m or more, and 50 $\mu$m or less, or 30 $\mu$m or less. The average particle diameter of the silicon-containing material (S) may be 1 $\mu$m or more or 5 $\mu$m or more, and 20 $\mu$m or less, 15 $\mu$m or less, or 10 $\mu$m or less. In one example of the negative electrode, the average particle diameter of the carbon material (C) is in a range of 10 to 30 $\mu$m, and the average particle diameter of the first silicon-containing material and the average particle diameter of the second silicon-containing material are each in a range of 1 to 15 $\mu$m. With this configuration, charge/discharge cycle characteristics are particularly improved.

The value of (the average particle diameter of the silicon-containing material (S))/(the average particle diameter of the carbon material (C)) is less than 1, or may be 0.8 or less, 0.6 or less, or 0.5 or less. Although there is no particular limitation on the lower limit of this value, the lower limit may be 0.05 or more, 0.1 or more, or 0.2 or more. Charge/discharge cycle characteristics are particularly improved by setting the value to 0.5 or less.

A ratio Zs1/Zs2 of the average circularity Zs1 to the average circularity Zs2 may be 0.4 or more or 0.5 or more, and 0.9 or less or 0.8 or less. The ratio Zs1/Zs2 may be, for example, in a range of 0.4 to 0.9.

A ratio Zsl/Zc of the average circularity Zs1 to the average circularity Zc may be 0.4 or more or 0.5 or more, and 0.9 or less or 0.8 or less. The ratio Zs1/Zc may be, for example, in a range of 0.4 to 0.9. Note that the average circularity Zs2 may be smaller than the average circularity Zc, or may be greater than or equal to the average circularity Zc.

A preferable example of the negative electrode satisfies at least one of conditions (J1) to (J4) below. For example, (J1) and (J2) may be satisfied, and in addition to (J1) and (J2), (J3) and/or (J4) may also be satisfied.

(J1) The average circularity Zc of the carbon material (C) is 0.7 or more, and the average circularity Zs2 of the second silicon-containing material is 0.6 or less.
(J2) The average particle diameter of the carbon material (C) is in a range of 10 to 30 $\mu$m, and the average particle diameter of the silicon-containing material (S) is in a range of 1 to 15 $\mu$m.
(J3) The ratio Zs1/Zs2 is in a range of 0.4 to 0.9.
(J4) The ratio Zs1/Zc is in a range of 0.4 to 0.9.

(Carbon Material (C))

The carbon material (C) contained in the negative electrode as an active material may contain at least one selected from the group consisting of graphite, soft carbon (easily-graphitizable carbon), and hard carbon (hardly-graphitizable carbon), or may be at least one of them. The carbon material (C) may contain at least one selected from the group consisting of graphite and hard carbon, or may be at least one of them. The carbon material (C) may be used alone or in combination of two or more. Graphite is preferable because it has excellent charge/discharge stability and low irreversible capacity. The percentage of graphite in the carbon material (C) may be 50% by mass or more, or 80% by mass or more.

Graphite refers to a material having a developed graphite-type crystal structure, and in general, refers to a carbon material in which average interplanar spacing d002 between (002) planes measured through X-ray diffraction is 0.34 nm or less. Examples of typical graphite include natural graphite, artificial graphite, and graphitized mesophase carbon particles. On the other hand, hard carbon refers to a carbon material in which minute graphite crystals are arranged in random directions, and further graphitization hardly progresses, and the average interplanar spacing d002 between (002) planes is larger than 0.38 nm. Hard carbon is preferable because it has low resistance and high capacity.

Carbon materials having various average particle diameters and average circularities are commercially available as the carbon material (C), and thus such carbon materials may be used. Alternatively, the average particle diameter and/or the average circularity of a commercially available carbon material (C) may be adjusted.

(Silicon-Containing Material (S))

Examples of the silicon-containing material (S) include silicon alloys, silicon compounds, and composite materials. The silicon-containing material (S) may be a composite material having a so-called sea-island structure.

The silicon-containing material (S) may be composite particles that include an ion-conducting phase and silicon phases (in one aspect, silicon particles) dispersed in the ion-conducting phase. The ion-conducting phase refers to a phase for conducting ions. The ion-conducting phase may be at least one selected from the group consisting of a silicate phase, a carbon phase, and a silicon oxide phase.

The first silicon-containing material and the second silicon-containing material may be each independently a first composite material that includes a silicate phase and first silicon phases dispersed in the silicate phase, or a second composite material that includes a carbon phase and second silicon phases dispersed in the carbon phase. Hereinafter, a composite material (the first composite material) that includes the silicate phase and the first silicon phases dispersed in the silicate phase may be referred to as a "silicon-containing material (Ss)", and a composite material (the second composite material) that includes the carbon phase and the second silicon phases dispersed in the carbon phase may be referred to as a "silicon-containing material (Sc)". The first silicon-containing material and the second silicon-containing material may be both a silicon-containing material (Ss), or a silicon-containing material (Sc). In a preferable example, one of the first silicon-containing material and the second silicon-containing material is a silicon-containing material (Ss), and the other of them is a silicon-containing material (Sc). For example, the first silicon-containing material may be a silicon-containing material (Ss), and the second silicon-containing material may be a silicon-containing material (Sc). Alternatively, the first silicon-containing material may be a silicon-containing material (Sc), and the second-silicon containing material may be a silicon-containing material (Ss).

The carbon phase, which is an ion-conducting phase, may be constituted of amorphous carbon. Examples of amorphous carbon that constitutes a carbon layer include hard carbon, soft carbon, and other amorphous carbons. Amorphous carbon refers to a carbon material in which average interplanar spacing d002 between (002) planes measured through X-ray diffraction exceeds 0.34 nm.

The main component (e.g., 95% by mass to 100% by mass) of the silicon oxide phase may be silicon dioxide.

The composition of the composite material that includes a silicon oxide phase and silicon phases dispersed in the silicon oxide phase can be represented by $SiO_x$ overall. $SiO_x$ has a structure in which minute silicon particles are dispersed in amorphous $SiO_2$. A content ratio x of oxygen to silicon satisfies, for example, $0.5 \leq x < 2.0$, and more preferably satisfies $0.8 < x < 1.5$.

The silicate phase may satisfy conditions (3) and/or (4) below.

(3) The silicate phase contains at least one selected from the group consisting of alkali metal elements and Group 2 elements (Group 2 elements in the long-period periodic table).
(4) The silicate phase contains an element L. The element L is at least one selected from the group consisting of B, Al, Zr, Nb, Ta, V, lanthanoids, Y, Ti, P, Bi, Zn, Sn, Pb, Sb, Co, Er, F, and W. Note that lanthanoid is a general term for 15 elements from lanthanum (La) with atomic number 57 to lutetium (Lu) with atomic number 71.

Regarding the condition (3) above, examples of the alkali metal elements include lithium (Li), potassium (K), and sodium (Na). Examples of Group 2 elements include magnesium (Mg), calcium (Ca), strontium (Sr), and barium (Ba). When an alkali metal element and/or a Group 2 element is contained therein, the irreversible capacity of the silicate phase is more significantly reduced. The silicate phase containing lithium (hereinafter, may be referred to as a "lithium silicate phase") is preferable because it has a small irreversible capacity and high initial charge/discharge efficiency.

The silicon-containing material (S) may have a coating layer arranged on its surface. The silicon-containing material (Ss) (the first composite material) may contain composite particles that include a silicate phase and a first silicon phase, and a coating layer covering at least a portion of the surfaces of the composite particles.

Examples of a coating layer present on the surface of the silicon-containing material (S) (e.g., the silicon-containing material (Ss)) include a conductive layer such as a conductive layer formed using a conductive carbon material, for example. The conductivity of the silicon-containing material (S) can be dramatically increased by forming a conductive layer on the surface of the silicon-containing material (S). A conductive material that constitutes the conductive layer is preferably a conductive material containing carbon. Examples of the conductive material containing carbon include conductive carbon materials. Examples of the conductive carbon material include carbon black, graphite, and amorphous carbon with low crystallinity. Amorphous carbon is preferable because it has a large buffering effect on the silicon phase whose volume changes accompanying charging and discharging of the battery. Amorphous carbon may be easily-graphitizable carbon (soft carbon), or hardly-graphitizable carbon (hard carbon). Examples of carbon black include acetylene black and Ketjenblack.

The thickness of the conductive layer is preferably thin enough not to affect the average particle diameter of the silicon-containing material (S). The thickness of the conductive layer is preferably in a range of 1 to 200 nm (e.g., a range of 5 to 100 nm) in consideration of ensuring conductivity and diffusibility of lithium ions. The thickness of the conductive layer can be measured by observing a cross-section of the silicon-containing material (S) using a SEM or TEM (transmission electron microscope).

Lithium silicate needs only be an oxide phase containing Li, Si, and O, and may also contain other elements. An atomic ratio O/Si of O to Si in the lithium silicate phase is, for example, greater than 2 and less than 4. Preferably, O/Si is greater than 2 and less than 3. An atomic ratio Li/Si of Li to Si in the lithium silicate phase is, for example, greater than 0 and less than 4.

The lithium silicate phase may contain or be made of lithium silicate represented by the formula: $Li_{2z}SiO_{2+z}$ ($0 < z < 2$). z preferably satisfies the relationship $0 < z < 1$, and $z = 1/2$ (i.e., $Li_2Si_2O_5$) is more preferable.

The total percentage of the silicon-containing material (S) and the carbon material (C) in the negative electrode active material is 60% by mass or more, 80% by mass or more, 90% by mass or more, or 90% by mass or more, and 100% by mass or less.

In the negative electrode (the negative electrode active material), the mass Ws of the silicon-containing material (S) may be 3% or more, 5% or more, or 10% or more, and 40% or less, 30% or less, or 20% or less of the sum of the mass Wc of the carbon material (C) and the mass Ws of the silicon-containing material (S). For example, in the negative electrode, the mass Ws of the silicon-containing material (S) may be in a range of 5% to 30% of the sum of the mass Wc of the carbon material (C) and the mass Ws of the silicon-containing material (S). In this range, it is conceivable that the expansion and contraction of the entire negative electrode can be controlled within a more suitable range, and benefits of high capacity provided by the silicon-containing material (S) can be enjoyed to the maximum.

In the negative electrode, the mass Ws1 of the first silicon-containing material may be 0.2 times or more, 0.5 times or more, or 1 time or more, and 5 times or less, 2 times or less, or 1 time or less the mass Ws2 of the second silicon-containing material. For example, the mass Ws1 may be in a range of 0.2 to 5 times the mass Ws2. In this range, respective effects of the first silicon-containing material and the second silicon-containing material can be effectively obtained. Note that a ratio between the mass Ws1 and the mass Ws2 corresponds to the ratio between the content of the first silicon-containing material and the content of the second silicon-containing material in the negative electrode.

It is desirable to analyze the composition of the silicon-containing material (S) using the silicon-containing material (S) of the negative electrode in a discharge state. Also, from the viewpoint of eliminating effects of an electrolyte decomposition product, it is desirable to analyze a sample of the silicon-containing material (S) in a battery before a charge/discharge cycle or at the beginning of the charge/discharge cycle.

The amounts of B, Na, K, and Al contained in the silicate layer are determined, for example, through quantitative analysis in accordance with JIS (Japanese Industrial Standard) R3105 (1995) (the method for analyzing borosilicate glass). Also, the Ca content is determined through quantitative analysis in accordance with JIS R3101 (1995) (the method for analyzing soda lime glass).

The amount of each element contained in the silicon-containing material (S) can be measured, for example, through inductively coupled plasma atomic emission spectroscopy (ICP-AES). Specifically, a sample of the silicon-containing material (S) is completely dissolved in a heated acid solution, carbon in the solution residue is removed through filtration, and the resulting filtrate is analyzed through ICP-AES to determine the spectral intensity of each element. Then, a calibration curve is created using a commercially available standard solution of each element, and the content of each element is calculated.

When the composition of the silicate phase is analyzed, the silicon-containing material (S) may be removed from a battery, for example, using the following procedure. Specifically, the battery is disassembled, the negative electrode is removed, and the negative electrode is cleaned using anhydrous ethyl methyl carbonate or dimethyl carbonate to remove the electrolyte. Then, a negative electrode mixture layer is peeled off from the negative electrode current collector, and is ground using a mortar and pestle to obtain sample powder. Thereafter, the sample powder is dried in a dry atmosphere for 1 hour, and is immersed in weakly boiled 6 M hydrochloric acid for 10 minutes to remove alkali metals such as Na and Li that may be contained in a binder or the like. Then, the sample powder is washed with ion-exchanged water, the sample powder is filtered, and is dried at 200°C for 1 hour. The silicon-containing material (S) is obtained in this manner.

The silicate phase, the silicon oxide phase, the silicon phase, and the like may be present in the silicon-containing material (S). These phases can be distinguished and quantified using Si-NMR. The Si content obtained through ICP-AES as described above is the sum of the amount of Si that constitutes the first silicon phase, the amount of Si in the silicate phase, and the amount of Si in the silicon oxide phase. On the other hand, the amount of Si that constitutes the silicon phase and the amount of Si in the silicon oxide phase can be determined separately using Si-NMR. Therefore, the amount of Si in the silicate phase can be determined by subtracting the amount of Si that constitutes the silicon phase and the amount of Si in the silicon oxide phase from the Si content obtained through ICP-AES. Note that a mixture containing, in a predetermined ratio, a silicate and the silicon phase whose Si contents are known or the like may be used for a standard substance required for quantification.

Desirable Si-NMR measurement conditions will be described below.

<Si-NMR measurement conditions>

Measurement device: Solid-state nuclear magnetic resonance spectrum measurement device (INOVA-400) manufactured by Varian, Inc.

Probe: Varian 7 mm CPMAS-2
MAS: 4.2 kHz
MAS speed: 4 kHz
Pulse: DD (45 degree pulse + signal acquisition time 1 hour decoupling)
Repetition time: 1200 sec to 3000 sec
Observation width: 100 kHz
Observation center: around -100 ppm
Signal acquisition time: 0.05 sec
Cumulative number: 560
Sample amount: 207.6 mg

Also, the elements in the silicon-containing material (S) can be quantified through SEM-EDX analysis, Auger electron spectroscopy (AES), laser ablation ICP mass spectrometry (LA-ICP-MS), and X-ray photoelectron spectroscopy (XPS), and the like.

The average particle diameter of the silicon phases (e.g., the first silicon phase and the second silicon phase) dispersed in the ion-conducting phase may be 1 nm or more, or 5 nm or more. The average particle diameter may be 1000 nm or less, 500 nm or less, 200 nm or less, 100 nm or less, or 50 nm or less. A minute silicon phase is preferable because it reduces a volume change during charging and discharging of the battery, and improves the structural stability of the silicon-containing material (S). The average particle diameter of the silicon phase can be determined using the above-described method for determining the average particle diameter of particles.

The crystallite size of the silicon phases (e.g., the first silicon phase and the second silicon phase) is preferably 30 nm or less. When the crystallite size is 30 nm or less, it is possible to further reduce the amount of change in the volume of the silicon-containing material (S) due to expansion and contraction of the silicon phase accompanying charging and discharging of the battery. The crystallite size is more preferably 30 nm or less, and further preferably 20 nm or less. When the crystallite size is 20 nm or less, expansion and contraction of the silicon phase are made uniform, and the number of microcracks in the silicon phase is reduced, thus further improving cycle characteristics.

The crystallite size of the silicon phase is calculated using the Scherrer equation using the full width at half maximum of a diffraction peak attributed to (111) plane of the silicon phase (single Si) in the X-ray diffraction pattern.

Examples of the silicon-containing material (S) having a sea-island structure include the silicon-containing material (Ss) and the silicon-containing material (Sc).

The silicon-containing material (Ss) includes the silicate phase and the silicon phases (the first silicon phases) dispersed in the silicate phase. Also, the silicon-containing material (Sc) includes a carbon phase and silicon phases (the second silicon phases) dispersed in the carbon phase. The first silicon phase and the second silicon phase can each be regarded as a silicon particle.

The silicon-containing material (Ss) and the silicon-containing material (Sc) may be each present in the form of particles having a so-called sea-island structure. First or second silicon phases (islands) are dispersed in a matrix (sea) of the silicate phase or the carbon phase, and are covered with a lithium ion-conducting phase (the silicate phase or the carbon phase). In the sea-island structure, the contact between the first or second silicon phase and an electrolyte is restricted, thus suppressing side reactions. Also, the stress caused by the expansion and contraction of the silicon phase is relieved by the matrix of the lithium-ion conductive phase.

The silicon-containing material (Ss) may contain a significant amount of the first silicon phase, have a fewer sites for capturing lithium ions that cause irreversible capacity, and side reactions are less likely to occur. However, the silicate phase of the silicon-containing material (Ss) has low electrical conductivity. Therefore, if a void is formed around the silicon-containing material (Ss) due to expansion and contraction caused by charging and discharging a battery, or if the silicon-containing material (Ss) cracks due to stress caused by expansion and contraction, then portions of the silicon-containing material (Ss) will be isolated, and the number of points of contact between portions of the silicon-containing material (Ss) and their peripheries will be reduced, which tends to reduce capacity.

In contrast, the silicon-containing material (Sc) includes the carbon phase and the second silicon phases dispersed in the carbon phase. The carbon phase of the silicon-containing material (Sc) has high electrical conductivity. Therefore, even if a void is formed around the silicon-containing material (Sc), or even if the silicon-containing material (Ss) cracks, portions of the silicon-containing material (Sc) will be unlikely to be isolated, and points of contact between the silicon-containing material (Sc) and their peripheries will be likely to be maintained. Thus, by replacing a portion of the silicon-containing material (Ss) with the silicon-containing material (Sc), points of contact between the overall silicon-containing material and its surrounding portions can be easily maintained, and a decrease in capacity during repeated charge/discharge cycles can be easily suppressed.

Relative values of the mass A of the silicon-containing material (Ss), the mass B of the silicon-containing material (Sc), and the mass C of the carbon material (C) that are contained in the negative electrode can be determined through cross-sectional SEM-EDX analysis. First, particles (particles A) of the silicon-containing material (Ss), particles (particles B) of the silicon-containing material (Sc), and particles (particles C) of the carbon material (C) are distinguished. The observation magnification is preferably 2000 to 20000 times.

In order to perform cross-sectional SEM-EDX analysis, for example, a battery is disassembled, the negative electrode is taken out, and a cross-section of the negative electrode is obtained using a cross-section polisher (CP). The cross-section of the negative electrode is observed using a scanning electron microscope (SEM). Elemental mapping analysis is performed on a backscattered electron image of the cross-section of the negative electrode, using energy dispersive X-rays (EDX). Total areas A to C that are respectively occupied by particles A to C are calculated using image analysis software. An area ratio of the total areas A to C may be regarded as a volume ratio of particles A to C.

Elements in the particles A to C can also be quantified through SEM-EDX analysis. Ten particles A, ten particles B, and ten particles C that have a maximum diameter of 5 $\mu$m or more are selected at random from the backscattered electron image of the cross-section of the negative electrode, and elemental mapping analysis is performed on these particles using energy dispersive X-rays (EDX). The area containing a target element is calculated using image analysis software. Values obtained by measuring the area containing a given element of 10 particles are averaged. The composition is calculated by converting the containing area into the number of atoms. The specific gravities of particles A to C are determined based on the compositions of the particles A to C, respectively. Then, B/A and (A+B)/(A+B+C) are calculated using the total areas A to C and the specific gravities A to C.

It is desirable that the above analysis and the analysis of the negative electrode described below are performed using the negative electrode in a discharge state. Also, from the viewpoint of eliminating effects of an electrolyte decomposition product, it is desirable to analyze a sample of the negative electrode in a battery before a charge/discharge cycle or at the beginning of the charge/discharge cycle.

Note that a film is formed on the surface of the silicon-containing material due to decomposition of the electrolyte in the charging/discharging process. Also, the silicon-containing material may include a conductive layer on its surface. Therefore, EDX mapping analysis is performed on a region located 1 μm or more inward from a peripheral edge of a cross-section of the silicon-containing material so that the measurement range does not include the film or the conductive layer.

Hereinafter, desirable measurement conditions for cross-sectional SEM-EDX analysis will be described.

<SEM-EDX measurement conditions>

Processing device: SM-09010 (Cross Section Polisher) manufactured by JEOL
Processing conditions: Acceleration voltage 6kV
Current value: 140 μA
Vacuum degree: $1 \times 10^{-3}$ to $2 \times 10^{-3}$ Pa
Measurement device: Electron microscope SU-70 manufactured by HITACHI
Acceleration voltage during analysis: 10 kV
Field: Free mode
Probe current mode: Medium
Probe current range: High
Anode Ap.: 3
OBJAp.: 2
Analysis area: 1 μm square
Analysis software: EDAX Genesis
CPS: 20500
Lsec: 50
Time constant: 3.2

The average particle diameter Da of the silicon-containing material (Ss) may be 2 μm or more, 3 μm or more, or 5 μm or more, and 15 μm or less, 12 μm or less, or 10 μm or less. It is conceivable that, in such a range, voids, which may form due to expansion and contraction of the silicon-containing material (Ss), are appropriately suppressed, and cracks, which may form in the silicon-containing material (Ss) due to expansion and contraction, are also easily suppressed.

The average particle diameter Db of the silicon-containing material (Sc) may be 3 μm or more, 6 μm or more, or 8 μm or more, and 18 μm or less, 15 μm or less, or 12 μm or less. When the negative electrode active material includes both the silicon-containing material (Ss) and the silicon-containing material (Sc), in the above range, even when a crack forms in the silicon-containing material (Sc), it is conceivable that a portion of the silicon-containing material (Sc) is likely to enter a void that forms due to contraction and cracking after the expansion of the silicon-containing material (Ss). It is conceivable that, as a result, the effect of maintaining electrical connection between the silicon-containing material (Ss) and its surrounding portions will become significant.

The content of the first silicon phase in the silicon-containing material (Ss) may be 30% by mass or more, 40% by mass or more, or 50% by mass or more, and 80% by mass or less, or 70% by mass or less. In such a range, not only a sufficiently high capacity of the negative electrode is achieved, but also side effects caused by expansion and contraction of the first silicon phase are limited, and thus cycle characteristics are likely to be improved. This is because the silicon-containing material (Ss) contains a sufficient amount of the first silicon phase, while the proportion of the silicate phase in the silicon-containing material (Ss) is not excessively small. By keeping the proportion of the silicate phase at a certain value or larger, contact between the first silicon phase and the electrolyte is significantly restricted, and side reactions are also significantly suppressed. Also, the stress caused by the expansion and contraction of the first silicon phase is easily relieved by the matrix of the silicate phase.

The content of the second silicon phase in the silicon-containing material (Sc) may be 30% by mass or more, 40% by mass or more, or 50% by mass or more, and 80% by mass or less, or 70% by mass or less. Similarly to the silicon-containing material (Ss), in such a range, a sufficient high capacity of the negative electrode can be achieved, and the cycle characteristics are also likely to be improved. Also, by maintaining a considerable proportion of the carbon phase, the carbon phase is likely to enter voids formed later due to charging and discharging of the battery, and for example, the electrical connection between the silicon-containing material (Ss) and its surrounding portions is likely to be maintained.

Usually, the side reaction amount of the silicon-containing material (Sc) is larger than that of the silicon-containing material (Ss). Thus, the average particle diameter of the second silicon phase is preferably larger than the average particle diameter of the first silicon phase, and is, for example, 1.1 to 2 times the average particle diameter of the first silicon phase. It is possible to reduce the area of contact with an electrolyte solution and reduce the side reaction amount by increasing the average particle diameter of the second silicon phase.

(Method for Adjusting Average Particle Diameter and Average Circularity of Carbon Material (C))

There is no particular limitation on a method for adjusting the average particle diameter and the average circularity of the carbon material (C), and a known method may be used. For example, a method similar to the mechanofusion method, a crushing method, and the like may be used alone or in combination. For example, the average particle diameter may be adjusted using a jet mill or the like, and then the average circularity may be adjusted using a device used for mechanofusion or the like.

(Method for Adjusting Average Particle Diameter and Average Circularity of Silicon-Containing Material (S))

There is no particular limitation on a method for adjusting the average particle diameter and the average circularity of the silicon-containing material (S) (the silicon-containing material (Ss) and the silicon-containing material (Sc)), and a known method may be used. For example, when a silicon-containing material is crushed into particles using a jet mill or the like, the average particle diameter and the average circularity may be adjusted by changing conditions such as the crushing time. For example, the average circularity can be lowered by shortening the crushing time.

Next, one example of a method for producing the silicon-containing material (Ss) will be described in detail. Here, a case where the first silicon phases are dispersed in a lithium silicate phase will be described.

Step (i)

A raw material mixture containing a Si raw material and a Li raw material in a predetermined ratio is used as a raw material for lithium silicate. The raw material mixture may contain the above-described alkali metal elements, Group 2 elements, and/or an element L. Lithium silicate is produced by melting the raw material mixture and passing the resulting melt through a metal rolls to form flakes. Then, the silicate flakes are crystallized through heat treatment in an atmosphere at a temperature that is higher than or equal to its glass transition point and is lower than or equal to its melting point. Note that the silicate flakes can be used without crystallization. It is also possible to produce silicate through a solid phase reaction by calcining the raw material mixture at a temperature that is lower than or equal to the melting point without melting the raw material mixture.

Silicon oxide can be used as the Si raw material. For example, lithium carbonate, lithium oxide, lithium hydroxide, lithium hydride, or the like can be used as the Li raw material. These may be used alone or in combination of two or more. It is possible to use oxides, hydroxides, carbonate compounds, hydrides, nitrates, sulfates, and the like of each element as raw materials for the alkali metal elements, Group 2 elements, and the element L.

Step (ii)

Then, raw material silicon is blended with lithium silicate to form a composite. For example, a silicon-containing material (Ss), which is a composite particle of lithium silicate and the first silicon phase (also referred to as silicate composite particle hereinafter), is produced through steps (a) to (c) below.

Step (a)

Raw material silicon powder and lithium silicate powder are mixed at a mass ratio of 20:80 to 95:5, for example. It is sufficient that coarse silicon particles having an average particle diameter of several micrometers to several tens of micrometers are used as the raw material silicon.

Step (b)

Next, a mixture of the raw material silicon and lithium silicate is crushed and formed to minute composite particles, using a crushing device such as a ball mill. At this time, wet grinding may be performed by adding an organic solvent to the mixture. The organic solvent functions to prevent an obj ect to be crushed from adhering to the inner wall of a crushing container.

It is possible to use, as an organic solvent, alcohols, ethers, fatty acids, alkanes, cycloalkanes, silicate esters, metal alkoxides, and the like.

Note that the raw material silicon and lithium silicate may be separately made into minute particles and then mixed. Also, silicon nanoparticles and amorphous lithium silicate nanoparticles may be produced and mixed without using a crushing device. A known method such as a gas phase method (e.g., a plasma method) or a liquid phase method (e.g., a liquid-phase reduction method) may be used to produce nanoparticles.

Step (c)

Then, the mixture is sintered by applying pressure to the mixture in, for example, an inert gas atmosphere (e.g., an atmosphere such as argon or nitrogen) while the mixture is heated at 600°C to 1000°C. A sintering device capable of applying pressure in an inert atmosphere, such as a hot press, can be used for sintering. During sintering, the silicate softens and flows to fill gaps between the first silicon phases. As a result, it is possible to obtain a dense block-shaped sintered article in which the silicate phase is a sea part and the first silicon phase is an island part. Silicate composite particles can be obtained by crushing the obtained sintered article.

Step (iii)

Subsequently, a conductive layer may be formed by coating at least portions of the surfaces of the composite particles with a conductive material. Examples of a method for coating surfaces of composite particles with a conductive carbon material include the CVD method using, as a raw material, hydrocarbon gas such as acetylene or methane, and a method for carbonizing a mixture, which is obtained by mixing coal pitch, petroleum pitch, phenolic resin, or the like with composite particles, by heating the mixture at 700°C to 950°C in an inert atmosphere (e.g., an atmosphere such as argon or nitrogen). Also, carbon black may be adhered to surfaces of composite particles.

Step (iv)

A step of cleaning composite particles (including composite particles having conductive layers on their surfaces) with an acid may be performed. For example, trace amounts of alkali components, which may be produced when the raw material silicon and lithium silicate are blended to form a composite, can be dissolved and removed by washing composite particles with an acidic aqueous solution. It is possible to use, as an acidic aqueous solution, an aqueous solution of an inorganic acid such as hydrochloric acid, hydrofluoric acid, sulfuric acid, nitric acid, phosphoric acid, or carbonic acid, or an aqueous solution of an organic acid such as citric acid or acetic acid.

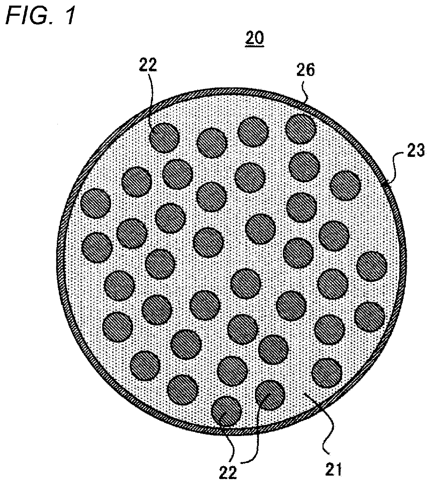

The silicon-containing material (Ss) can be obtained through the above steps. A cross-section of a silicate composite particle 20 coated with a conductive layer is schematically shown in FIG. 1 as one example of the silicon-containing material (Ss).

A silicate composite particle (base particle) 23 includes a lithium silicate phase 21, and silicon phases 22 dispersed in the lithium silicate phase 21. The silicate composite particle (base particle) 23 has a sea-island structure in which minute silicon phases 22 are dispersed in a matrix of the lithium silicate phase 21. The surface of the silicate composite particle (base particle) 23 is coated with a conductive layer 26.

Silicon oxide phases (not shown) may be dispersed in the lithium silicate phase 21. The $SiO_2$ content in the silicate composite particle (base particle) 23 measured through Si-NMR is preferably, for example, 30% by mass or less, and more preferably less than 7% by mass.

The silicate composite particle (base particle) 23 may contain other components, in addition to the above. For example, the base particle 23 may contain a reinforcing material such as a carbon material, an oxide such as $ZrO_2$, or a carbide in an amount of less than 10% by mass with respect to the base particle 23.

Next, two methods for producing the silicon-containing material (Sc) will be described as examples.

(a) First Method

Raw material silicon and a carbon source are mixed, and the mixture of the raw material silicon and the carbon source is crushed and formed to minute composite particles, using a crushing device such as a ball mill. An organic solvent may be added to the mixture. At this time, the raw material silicon is pulverized to produce second silicon phases. The second silicon phases are dispersed in the carbon source matrix.

Examples of the carbon source include water-soluble resins such as carboxymethyl cellulose (CMC), hydroxyethyl cellulose, polyacrylates, polyacrylamides, polyvinyl alcohol, polyethylene oxide, and polyvinylpyrrolidone, sugars such as cellulose and sucrose, petroleum pitch, coal pitch, and tar, and there is no particular limitation thereto.

It is possible to use, as an organic solvent, alcohols, ethers, fatty acids, alkanes, cycloalkanes, silicate esters, metal alkoxides, and the like.

Then, amorphous carbon is produced by heating the composite of the second silicon phase and the carbon source to 700°C to 1200°C in an inert gas atmosphere (e.g., an atmosphere such as argon or nitrogen) to carbonize the carbon source. As a result, the silicon-containing material (Sc) in which the second silicon phases are dispersed in the carbon phase containing amorphous carbon can be obtained.

(b) Second Method

Raw material silicon and a carbon material are mixed, and the mixture of the raw material silicon and the carbon material is crushed and formed to minute composite particles, using a crushing device such as a ball mill. An organic solvent may be added to the mixture. At this time, the raw material silicon is pulverized to produce second silicon phases. The second silicon phases are dispersed in the carbon material matrix.

By forming a composite of the raw material silicon and the carbon material as described above, it is possible to obtain the silicon-containing material (Sc) in which the second silicon phases are dispersed in the carbon phase containing amorphous carbon. Thereafter, the silicon-containing material (Sc) may be heated to 700°C to 1200°C in an inert gas atmosphere.

Amorphous carbon is preferable as the carbon material, and easily-graphitizable carbon (soft carbon), hardly-graphitizable carbon (hard carbon), carbon black, or the like may be used. Examples of carbon black include acetylene black and Ketjenblack. Even when graphite is used as the carbon material, most of the crystal structure of graphite is lost when a composite of the second silicon phases and the carbon material is obtained using a crushing device, and a carbon phase made of amorphous carbon is formed.

(Example of Configuration of Secondary Battery)

An example of a configuration of a secondary battery according to the present disclosure will be described below. Various selections can be made for other constituent elements, except that the above-described negative electrode active material is used as a negative electrode active material. For example, known constituent elements may be used as constituent elements other than the negative electrode active material. The secondary battery according to the present disclosure usually includes a positive electrode, a negative electrode, an electrolyte, and a separator disposed between the positive electrode and the negative electrode. These constituent elements will be described below. Note that there is no limitation on the method for producing a secondary battery, except for using the above-described negative electrode active material, and a known production method may be used.

[Negative Electrode]

The negative electrode includes, for example, a negative electrode current collector, and a negative electrode mixture layer that is formed on the surface of the negative electrode current collector and contains the negative electrode active material. The negative electrode mixture layer can be formed by applying, to the surface of the negative electrode current collector, a negative electrode slurry in which components of the negative electrode mixture are dispersed in a dispersion medium, and drying the slurry. The dried coating film may be rolled as needed.

The negative electrode mixture contains a negative electrode active material as an essential component, and may contain a binding agent, a conductive agent, a thickener, and the like as optional components. The negative electrode active material contains a carbon material (C) and a silicon-containing material (S).

A non-porous conductive substrate (a metal foil or the like), or a porous conductive substrate (a mesh body, a net body, a punched sheet, or the like) is used as the negative electrode current collector. Examples of the material of the negative electrode current collector include stainless steel, nickel, nickel alloys, copper, and copper alloys.

Examples of the binding agent include fluoropolymers, polyolefin resins, polyamide resins, polyimide resins, vinyl resins, styrene-butadiene copolymer rubber (SBR), and polyacrylic acid, and derivatives thereof. These may be used alone or in combination of two or more.

Examples of the conductive agent include carbon black, conductive fibers, carbon fluoride, and organic conductive materials. These may be used alone or in combination of two or more.

Examples of the thickener include carboxymethyl cellulose (CMC) and polyvinyl alcohol. These may be used alone or in combination of two or more.

Examples of the dispersion medium include water, alcohols, ethers, N-methyl-2-pyrrolidone (NMP), and a mixed solvent thereof.

[Positive Electrode]

The positive electrode includes, for example, a positive electrode current collector, and a positive electrode mixture layer that is formed on the surface of the positive electrode current collector. The positive electrode mixture layer can be formed by applying, to the surface of the positive electrode current collector, a positive electrode slurry in which components of the positive electrode mixture are dispersed in a dispersion medium, and drying the slurry. The dried coating film may be rolled as needed.

The positive electrode mixture contains a positive electrode active material as an essential component, and may contain a binding agent, a conductive agent, and the like as optional components.

It is possible to use a material that absorbs and releases lithium ions, as the positive electrode active agent. A known positive electrode active material used in a non-aqueous electrolyte secondary battery may be used as the positive electrode active material. Examples of the positive electrode active material include lithium composite metal oxides. Examples of the lithium composite metal oxides include $Li_aCoO_2$, $Li_aNiO_2$, $Li_aMnO_2$, $Li_aCo_bNi_{1-b}O_2$, $Li_aCo_bM_{1-b}O_c$, $Li_aNi_{1-b}M_bO_c$, $Li_aMn_2O_4$, $Li_aMn_{2-b}M_bO_4$, $LiMePO_4$, and $Li_2MePO_4F$. Here, M represents at least one selected from the group consisting of Na, Mg, Sc, Y, Mn, Fe, Co, Ni, Cu, Zn, Al, Cr, Pb, Sb, and B. Me includes at least a transition metal (e.g., contains at least one selected from the group consisting of Mn, Fe, Co, and Ni). Here, $0 \leq a \leq 1.2$, $0 \leq b \leq 0.9$, and $2.0 \leq c \leq 2.3$ are satisfied. Note that value a indicating the mole ratio of lithium is a value immediately after the active material is produced, and increases and decreases due to a battery being charged/discharged.

It is possible to use, as the binding agent and the conductive agent, materials similar to those exemplified for the negative electrode. Graphite such as natural graphite or artificial graphite may be used as the conductive agent.

A conductive substrate having a shape similar to that described for the negative electrode current collector may be used for the positive electrode current collector. Examples of the material of the positive electrode current collector include stainless steel, aluminum, aluminum alloys, and titanium.

[Electrolyte]

An electrolyte (or electrolyte solution) contains a solvent and a lithium salt dissolved in the solvent. The concentration of the lithium salt in the electrolyte is, for example, 0.5 to 2 mol/L. The electrolyte may contain a known additive agent.

An aqueous solvent or a non-aqueous solvent is used as the solvent. For example, a cyclic carbonic acid ester, a chain carbonic acid ester, a cyclic carboxylic acid ester, or the like is used as the non-aqueous solvent. Examples of the cyclic carbonic acid ester include propylene carbonate (PC) and ethylene carbonate (EC). Examples of the chain carbonic acid ester include diethyl carbonate (DEC), ethyl methyl carbonate (EMC), and dimethyl carbonate (DMC). Examples of the cyclic carboxylic acid ester include γ-butyrolactone (GBL) and γ-valerolactone (GVL). These non-aqueous solvents may be used alone or in combination of two or more.

It is possible to use, as a lithium salt, for example, lithium salts of chlorine-containing acids ($LiClO_4$, $LiAlCl_4$, $LiB_{10}Cl_{10}$, and the like), lithium salts of fluorine-containing acids ($LiPF_6$, $LiBF_4$, $LiSbF_6$, $LiAsF_6$, $LiCFsSOs$, $LiCF_3CO_2$, and the like), lithium salts of fluorine-containing acid imides ($LiN(CF_3SO_2)_2$, $LiN(CF_3SO_2)(C_4F_9SO_2)$, $LiN(C_2F_5SO_2)_2$, and the like), lithium halides (LiCl, LiBr, LiI, and the like), and the like. These lithium salts may be used alone or in combination of two or more.

The secondary battery according to this embodiment may be a non-aqueous electrolyte secondary battery using a non-aqueous electrolyte. A non-aqueous electrolyte can be obtained by, for example, dissolving a lithium salt in a non-aqueous solvent.

[Separator]

It is desirable to interpose a separator between the positive electrode and the negative electrode. The separator has high ion permeability, appropriate mechanical strength, and insulation properties. It is possible to use, as a separator, a microporous thin film, woven fabric, nonwoven fabric, or the like. Polyolefins such as polypropylene and polyethylene can be used, for example, as a material of the separator.

An example of a secondary battery includes an electrode group, an electrolyte, and an exterior body that houses them. The electrode group may be a rolled-up type electrode group in which a positive electrode and a negative electrode are rolled up with the separator interposed therebetween. Alternatively, the electrode group may have another form. For example, the electrode group may be a stacked-type electrode group in which a positive electrode and a negative electrode are stacked with the separator interposed therebetween. There is no particular limitation on the shape of the secondary battery, and the secondary battery may be, for example, cylindrical, rectangular, coin-shaped, button-shaped, laminated, or the like.

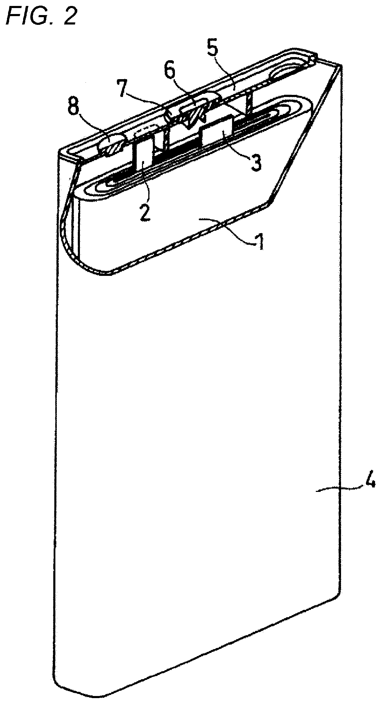

FIG. 2 is a partially cutaway schematic perspective view of a prismatic secondary battery according to one embodiment of the present disclosure. Note that the battery shown in FIG. 2 is an example, and the secondary battery according to the present disclosure is not limited to the battery shown in FIG. 2.

The battery includes a prismatic battery case 4 having a bottom, an electrode group 1 and an electrolyte (not shown) that are housed in the battery case 4, and a sealing plate 5 that seals an opening of the battery case 4. The electrode group 1 includes an elongated strip-shaped negative electrode, an elongated strip-shaped positive electrode, and a separator interposed therebetween. The sealing plate 5 has a liquid injection port closed with a sealing plug 8, and a negative electrode terminal 6 insulated from the sealing plate 5 with a gasket 7.

One end of a negative electrode lead 3 is attached to the negative electrode current collector through welding or the like. One end of a positive electrode lead 2 is attached to the positive electrode current collector through welding or the like. The other end of the negative electrode lead 3 is electrically connected to the negative electrode terminal 6. The other end of the positive electrode lead 2 is electrically connected to the sealing plate 5.

Examples

Hereinafter, the present disclosure will be specifically described based on examples and comparative examples, but the present disclosure is not limited to the following examples. A plurality of secondary batteries were produced using the following procedure.

<Battery A1>

[Preparation of Silicon-Containing Material (Ss)]

A mixture was obtained by mixing silicon dioxide and lithium carbonate so that the atomic ratio: Si/Li was 1.05. Lithium silicate represented by formula: $Li_2Si_2O_5$ (z=0.5) was obtained by calcining the obtained mixture at 950°C in air for 10 hours. The obtained lithium silicate was crushed to a certain size (the average particle diameter was 100 $\mu$m or less).

The crushed lithium silicate ($Li_2Si_2O_5$) and raw material silicon (3 N, the average particle diameter was 10 $\mu$m) were mixed at a mass ratio of 40:60. A pot (made of SUS, the volume was 500 mL) of a planetary ball mill (P-5 manufactured by Fritsch) was filled with the mixture. Then, 24 SUS balls (with a diameter of 20 mm) were placed in the pot, its lid was closed, and the mixture was crushed at 200 rpm for 50 hours in an inert atmosphere.

Thereafter, the powdery mixture was taken out from the pot in an inert atmosphere, calcined at 800°C for 4 hours under pressure using a hot press machine in an inert atmosphere, and thus a sintered body of the mixture (silicon-silicate composite) was obtained.

Then, a conductive layer was formed by crushing the silicon-silicate composite, passing the crushed composite through a 40-$\mu$m mesh, mixing the obtained silicate composite particles with coal pitch (MCP250 manufactured by JFE Chemical Corporation), calcining the mixture at 800°C in an inert atmosphere, and coating the surfaces of the silicate composite particles with conductive carbon. The amount of coating of the conductive layer was 5% by mass with respect to the total mass of the silicate composite particles and the conductive layer. Silicate composite particles P1 (silicon-containing material (Ss)) having the conductive layer were obtained in this manner. Then, the average particle diameter of the silicate composite particles P1 was adjusted using a sieve.

The crystallite size of the silicate composite particles P1, which was calculated using the Scherrer equation based on a diffraction peak attributed to Si(111) plane through XRD analysis of the silicate composite particles P1, was 15 nm.

Analysis of the composition of the lithium silicate phase of the silicate composite particle P1 using the above method (ICP-AES) revealed that the Si/Li ratio was 1.0, and the $Li_2Si_2O_5$ content measured through Si-NMR was 70% by mass (the content of the first silicon phase was 30% by mass).

[Preparation of Silicon-Containing Material (Sc)]

Coal pitch (MCP250 manufactured by JFE Chemical Corporation) serving as a carbon source and raw material silicon (3 N, the average particle diameter was 10 $\mu$m) were mixed at a mass ratio of 50:50. The pot (made of SUS, the volume was 500 mL) of a planetary ball mill (P-5 manufactured by Fritsch) was filled with the mixture, 24 SUS balls (with a diameter of 20 mm) were placed in the pot, its lid was closed, the mixture was crushed at 200 rpm for 50 hours in an inert atmosphere, and thus a composite of the second silicon phase and the carbon source was obtained.

Then, composite particles P2 (the silicon-containing material (Sc)) in which the second silicon phases were dispersed in the carbon phase containing amorphous carbon were obtained by calcining the composite of the second silicon phase and the carbon source, and carbonizing the carbon source in an inert gas atmosphere. Then, the average particle diameter of the composite particles P2 was adjusted using a jet mill.

The crystallite size of the second silicon phase, which was calculated using the Scherrer equation based on a diffraction peak attributed to Si(111) plane through XRD analysis of the second silicon-containing particles, was 15 nm.

[Carbon Material (C)]

Spherical graphite particles having an average particle diameter Dc of 24 $\mu$m were prepared.

[Production of Negative Electrode]

A negative electrode active material was obtained by mixing the silicate composite particles P1, the composite particles P2, and graphite particles at a mass ratio of silicate composite particles P1 : composite particles P2 : graphite particles = 3 : 3 : 94. A mixture was obtained by mixing the obtained negative electrode active material, sodium carboxymethyl cellulose (CMC-Na), and styrene-butadiene rubber (SBR) at a mass ratio of the negative electrode active material: CMC-Na : SBR = 97.5 : 1 : 1.5. Water was added to the mixture, and then stirred using a mixer (T.K. HIVIS MIX manufactured by Primix Corporation). A negative electrode slurry was prepared in this manner.

Then, a coating film was formed by applying the negative electrode slurry to the surface of a copper foil such that the mass of the negative electrode mixture was 190 g per square meter. A negative electrode in which negative electrode mixture layers (the density was 1.5 g/cm$^3$) were formed on both surfaces of the copper foil was obtained by drying the coating film and then rolling the copper foil.

[Production of Positive Electrode]

A mixture was obtained by mixing a lithium-nickel composite oxide ($LiNi_{0.8}Co_{0.18}Al_{0.02}O_2$), acetylene black, and polyvinylidene fluoride at a mass ratio of the lithium nickel composite oxide : acetylene black: polyvinylidene fluoride = 95 : 2.5 : 2.5. A positive electrode slurry was prepared by adding N-methyl-2-pyrrolidone (NMP) to the mixture, and then stirring the mixture using the mixer (T.K. HIVIS MIX manufactured by Primix Corporation). Then, a coating film was formed by applying the positive electrode slurry to the surface of an aluminum foil. A positive electrode in which positive electrode mixture layers (the density was 3.6 g/cm$^3$) were formed on both surfaces of the aluminum foil was obtained by drying the coating film and then rolling the aluminum foil.

[Preparation of Electrolyte Solution]

An electrolyte solution was prepared by dissolving a lithium salt in a non-aqueous solvent. A mixed solvent containing ethylene carbonate (EC), dimethyl carbonate (DMC), and methyl acetate (MA) at a volume ratio of EC : DMC : MA= 20 : 40 : 40 was used as a non-aqueous solvent. The concentration of $LiPF_6$ in the electrolyte solution was 1.0 mol/L.

[Production of Secondary Battery]

Tabs were respectively attached to the electrodes. Then, an electrode group was produced by spirally rolling up the positive electrode and the negative electrode with a separator interposed therebetween. At this time, the electrodes were rolled up such that the tabs were located at the outermost periphery. Then, the electrode group was inserted into an exterior body constituted by an aluminum laminate film and dried in a vacuum at 105°C for 2 hours. Thereafter, an electrolyte solution was introduced into the exterior body, and an opening of the exterior body was sealed. A battery A1 was obtained in this manner.

<Batteries A2 to A8 and Batteries CA1 to CA4>

A plurality of negative electrodes were produced using the same method and conditions as those for producing the negative electrode of the battery A1, except that the average particle diameter and the average circularity of the above-described silicate composite particles P1 and composite particles P2 (the silicon-containing material (S)), the average particle diameter and the average circularity of the above-described graphite particles (the carbon material (C)), and their mixing ratios were changed. Also, batteries A2 to A8 and batteries CA1 to CA4 were produced using the same method and conditions as those for producing the battery A1, except that the produced negative electrode was used.

The average particle diameter and the average circularity of the silicate composite particles P1 (the silicon-containing material (Ss)) and the composite particles P2 (the silicon-containing material (Sc)) were changed using the above-described method. Carbon materials (C) having different average particle diameters and different average circularities were purchased and used.

The average particle diameters and the average circularities of the silicate composite particles P1 (the silicon-containing material (Ss)), the composite particles P2 (the silicon-containing material (Sc)), and the graphite particles (the carbon material (C)) were measured using the following method. To measure the average particle diameter, first, volume-based particle size distributions of the particles were measured using a laser diffraction particle size distribution analyzer (MT3300EXII manufactured by Microtrac). Then, the particle diameter at a cumulative volume of 50% (median diameter D50) was defined as the average particle diameter. The average circularity was measured using the above-described method, that is, a method for measuring particles dispersed in a resin.

[Evaluation]

The produced batteries were evaluated using the following method.

(Charge/Discharge Cycle Test)

A charge/discharge cycle test was conducted on the produced batteries under the following conditions. First, in a charging process, constant current charging was performed at a current of 0.3It until the voltage reached 4.2 V, and then constant voltage charging was performed at a constant voltage of 4.2 V until the current reached 0.015It. Then, in a discharging process, constant current discharging was performed at a current of 0.3It until the voltage reached 2.75 V A pause period between charging and discharging was 10 minutes. Charging and discharging were performed in an environment at 25°C.

Note that (1/X)It represents the current, (1/X)It(A) = rated capacity (Ah)/X(h) is satisfied, and X represents the time taken to charge or discharge rated capacity of electricity. For example, 0.5It indicates that X=2 holds true and the current value is rated capacity (Ah)/2(h).

Charging and discharging were repeated under the above charge/discharge conditions. At this time, discharge capacity C1 at the first cycle and discharge capacity C300 at the 300th cycle were measured for each battery. Then, capacity deterioration percentage (%) was calculated using the following formula.

$$\text{Capacity deterioration percentage}(\%) = 100 \times (\text{C1} - \text{C300})/\text{C1}$$

Evaluation results are shown in Tables 1 to 3. Note that the capacity deterioration percentages of the batteries in Table 1 are expressed as relative values when the capacity deterioration percentage of the battery C1 was set to 100. The capacity deterioration percentages of the batteries in Table 2 are expressed as relative values when the capacity deterioration percentage of the battery C3 was set to 100. The capacity deterioration percentages of the batteries in Table 3 are expressed as relative values when the capacity deterioration percentage of the battery C4 was set to 100. The smaller the value of the capacity deterioration percentage is, the higher the capacity maintenance percentage is. Note that in this example, the silicate composite particles P1 (the silicon-containing material (Ss)) correspond to the first silicon-containing material, and the composite particles P2 (the silicon-containing material (Sc)) correspond to the second silicon-containing material.

[Table 1]

| Batteries | Carbon Material (C) | | | First Silicon-containing Material (Silicon-containing Material (Ss)) | | | Second Silicon-containing Material (Silicon-containing Material (Sc)) | | | Average Circularity Ratio | | Capacity Deterioration Percentage (Relative Values) |
|---|---|---|---|---|---|---|---|---|---|---|---|---|
| | Average Particle Diameter ($\mu$m) | Average Circularity $Zc$ | Mass Ratio | Average Particle Diameter ($\mu$m) | Average Circularity $Zs1$ | Mass Ratio | Average Particle Diameter ($\mu$m) | Average Circularity $Zs2$ | Mass Ratio | $Zs1/Zs2$ | $Zs1/Zc$ | |
| A1 | 24 | 0.74 | 94 | 6 | 0.42 | 3 | 12 | 0.78 | 3 | 0.54 | 0.57 | 81 |
| A2 | 18 | 0.71 | 94 | 5 | 0.52 | 3 | 5 | 0.65 | 3 | 0.80 | 0.73 | 72 |
| A3 | 24 | 0.74 | 94 | 5 | 0.52 | 2 | 5 | 0.65 | 4 | 0.80 | 0.70 | 75 |
| C1 | 24 | 0.74 | 94 | 12 | 0.52 | 6 | - | - | - | - | 0.70 | 100 |
| C2 | 24 | 0.74 | 94 | 11 | 0.78 | 6 | - | - | - | - | 1.05 | 115 |

EP 4 411 884 A1

[Table 2]

| Batteries | Carbon Material (C) | | | First Silicon-containing Material (Silicon-containing Material (Ss)) | | | Second Silicon-containing Material (Silicon-containing Material (Sc)) | | | Average Circularity Ratio | | Capacity Deterioration Percentage (Relative Values) |
|---|---|---|---|---|---|---|---|---|---|---|---|---|
| | Average Particle Diameter ($\mu$m) | Average Circularity Zc | Mass Ratio | Average Particle Diameter ($\mu$m) | Average Circularity Zs1 | Mass Ratio | Average Particle Diameter ($\mu$m) | Average Circularity Zs2 | Mass Ratio | Zs1/Zs2 | Zs1/Zc | |
| A4 | 24 | 0.74 | 86 | 6 | 0.42 | 4 | 12 | 0.78 | 10 | 0.54 | 0.57 | 80 |
| A5 | 18 | 0.71 | 85 | 5 | 0.52 | 3 | 5 | 0.65 | 12 | 0.80 | 0.73 | 76 |
| A6 | 24 | 0.74 | 86 | 5 | 0.52 | 10 | 5 | 0.65 | 4 | 0.80 | 0.70 | 78 |
| C3 | 24 | 0.74 | 85 | 12 | 0.52 | 15 | - | - | - | - | 0.70 | 100 |

[Table 3]

| Batteries | Carbon Material (C) | | | First Silicon-containing Material (Silicon-containing Material (Ss)) | | | Second Silicon-containing Material (Silicon-containing Material (Sc)) | | | Average Circularity Ratio | | Capacity Deterioration Percentage (Relative Values) |
|---|---|---|---|---|---|---|---|---|---|---|---|---|
| | Average Particle Diameter ($\mu$m) | Average Circularity Zc | Mass Ratio | Average Particle Diameter ($\mu$m) | Average Circularity Zs1 | Mass Ratio | Average Particle Diameter ($\mu$m) | Average Circularity Zs2 | Mass Ratio | Zs1/Zs2 | Zs1/Zc | |
| A7 | 24 | 0.74 | 76 | 6 | 0.42 | 5 | 12 | 0.78 | 19 | 0.54 | 0.57 | 71 |
| A8 | 18 | 0.71 | 78 | 5 | 0.52 | 7 | 5 | 0.65 | 15 | 0.80 | 0.73 | 75 |
| C4 | 24 | 0.74 | 78 | 12 | 0.52 | 22 | - | - | - | - | 0.70 | 100 |

The batteries C1 to C4 are batteries of comparative examples, and the batteries A1 to A8 are batteries of examples. As shown in Tables, the batteries A1 to A7 that satisfied the following conditions (1) and (2) had smaller capacity deterioration percentages than the batteries C1 to C4. That is, the batteries A1 to A8 had larger capacity maintenance percentages than the batteries C1 to C4.

(1) The average particle diameter of the first silicon-containing material and the average particle diameter of the second silicon-containing material are each smaller than the average particle diameter of the carbon material (C).
(2) The average circularity Zc of the carbon material (C), the average circularity Zs1 of the first silicon-containing material, and the average circularity Zs2 of the second silicon-containing material satisfy Zs1<Zc and Zs1<Zs2.

As shown in Tables, it is preferable that the average circularity Zc of the carbon material (C) is 0.70 or more, and the average circularity of the first silicon-containing material is 0.60 or less. Furthermore, as shown in Tables, the value of the average circularity ratio Zs1/Zs2 is preferably 0.80 or less, and more preferably 0.60 or less. The value of the average circularity ratio Zs1/Zc is preferably 0.80 or less, and more preferably 0.60 or less.

[Industrial Applicability]

The present disclosure can be used for secondary batteries, and is useful, for example, as a main power source for mobile communication devices, portable electronic devices, and the like.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Reference Signs List]

1: Electrode group, 2: Positive electrode lead, 3: Negative electrode lead, 4: Battery case, 5: Sealing plate, 6: Negative electrode terminal, 7: Gasket, 8: Sealing plug, 20: Silicate composite particle coated with conductive layer, 21: Lithium silicate phase, 22: First silicon phase (silicon particle), 23: Silicate composite particle, 26: Conductive layer

**Claims**

1. A secondary battery comprising:

   a positive electrode; and
   a negative electrode containing a negative electrode active material,
   wherein the negative electrode active material contains a carbon material and a silicon-containing material,
   the silicon-containing material includes a first silicon-containing material and a second silicon-containing material,
   an average particle diameter of the first silicon-containing material and an average particle diameter of the second silicon-containing material are each smaller than an average particle diameter of the carbon material, and
   an average circularity Zc of the carbon material, an average circularity Zs1 of the first silicon-containing material, and an average circularity Zs2 of the second silicon-containing material satisfy Zs1<Zc and Zs1<Zs2.

2. The secondary battery according to claim 1,
   wherein the average circularity Zc is 0.7 or more.

3. The secondary battery according to claim 1 or 2,
   wherein the average circularity Zs1 is 0.6 or less.

4. The secondary battery according to any one of claims 1 to 3,

   wherein the average particle diameter of the carbon material is in a range of 10 to 30 $\mu$m, and
   the average particle diameter of the first silicon-containing material and the average particle diameter of the second silicon-containing material are each in a range of 1 to 15 $\mu$m.

**5.** The secondary battery according to any one of claims 1 to 4,
wherein a ratio Zs1/Zs2 of the average circularity Zs1 to the average circularity Zs2 is in a range of 0.4 to 0.9.

**6.** The secondary battery according to any one of claims 1 to 5,
wherein a ratio Zsl/Zc of the average circularity Zs1 to the average circularity Zc is in a range of 0.4 to 0.9.

**7.** The secondary battery according to any one of claims 1 to 6,
wherein the carbon material contains at least one selected from the group consisting of graphite, soft carbon, and hard carbon.

**8.** The secondary battery according to any one of claims 1 to 7,
wherein the silicon-containing material is composite particles that include an ion-conducting phase and silicon phases dispersed in the ion-conducting phase.

**9.** The secondary battery according to claim 8,
wherein the ion-conducting phase is at least one selected from the group consisting of a silicate phase, a carbon phase, and a silicon oxide phase.

**10.** The secondary battery according to any one of claims 1 to 7,
wherein the first silicon-containing material and the second silicon-containing material are each independently a first composite material that includes a silicate phase and first silicon phases dispersed in the silicate phase, or a second composite material that includes a carbon phase and second silicon phases dispersed in the carbon phase.

**11.** The secondary battery according to claim 10,
wherein the silicate phase contains at least one selected from the group consisting of alkali metal elements and Group 2 elements.

**12.** The secondary battery according to claim 10 or 11,
wherein the silicate phase contains at least one selected from the group consisting of B, Al, Zr, Nb, Ta, V, lanthanoids, Y, Ti, P, Bi, Zn, Sn, Pb, Sb, Co, Er, F, and W.

**13.** The secondary battery according to any one of claims 10 to 12,
wherein the first composite material contains composite particles that include the silicate phase and the first silicon phases, and a coating layer covering at least a portion of surfaces of the composite particles.

**14.** The secondary battery according to any one of claims 1 to 13,
wherein, in the negative electrode, the mass of the silicon-containing material is in a range of 5% to 30% of the sum of the mass of the carbon material and the mass of the silicon-containing material.

**15.** The secondary battery according to any one of claims 1 to 14,
wherein, in the negative electrode, the mass of the first silicon-containing material is in a range of 0.2 to 5 times the mass of the second silicon-containing material.

FIG. 1

*FIG. 2*

## INTERNATIONAL SEARCH REPORT

International application No.

**PCT/JP2022/034231**

### A.    CLASSIFICATION OF SUBJECT MATTER

***H01M 4/38***(2006.01)i; ***H01M 4/133***(2010.01)i; ***H01M 4/134***(2010.01)i; ***H01M 4/36***(2006.01)i; ***H01M 4/587***(2010.01)i
FI:    H01M4/38 Z; H01M4/36 E; H01M4/587; H01M4/36 A; H01M4/36 C; H01M4/133; H01M4/134

According to International Patent Classification (IPC) or to both national classification and IPC

### B.    FIELDS SEARCHED

Minimum documentation searched (classification system followed by classification symbols)

H01M4/38; H01M4/133; H01M4/134; H01M4/36; H01M4/587; H01M4/48

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
|---|---|---|
| A | JP 2011-96638 A (NEC ENERGY DEVICES, LTD.) 12 May 2011 (2011-05-12) | 1-15 |
| A | JP 2003-123740 A (NEC CORP.) 25 April 2003 (2003-04-25) | 1-15 |
| A | JP 2007-128766 A (SONY CORP.) 24 May 2007 (2007-05-24) | 1-15 |
| A | WO 2019/220576 A1 (HITACHI CHEMICAL CO., LTD.) 21 November 2019 (2019-11-21) | 1-15 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/034231**

| Patent document cited in search report | | | Publication date (day/month/year) | Patent family member(s) | | | Publication date (day/month/year) |
|---|---|---|---|---|---|---|---|
| JP | 2011-96638 | A | 12 May 2011 | US | 2012/0183843 | A1 | |
| | | | | WO | 2011/040447 | A1 | |
| | | | | EP | 2472661 | A1 | |
| | | | | CN | 102549829 | A | |
| JP | 2003-123740 | A | 25 April 2003 | (Family: none) | | | |
| JP | 2007-128766 | A | 24 May 2007 | US | 2007/0105017 | A1 | |
| | | | | US | 2015/0093642 | A1 | |
| WO | 2019/220576 | A1 | 21 November 2019 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016110969 A